# EUROPEAN PATENT SPECIFICATION

(11) **EP 1 782 673 B1**
(45) Date of publication and mention of the grant of the patent: **26.11.2008**
(21) Application number: 06076884.3
(22) Date of filing: 16.10.2006
(51) Int. Cl.: A01D 34/74

(54) **Cutting height adjusting system for lawnmower**
Schnitthöheneinstellsystem für Rasenmäher
Système de réglage de la hauteur de coupe pour tondeuses à gazon

(30) Priority: 02.11.2005 IT MI20050382
(43) Date of publication of application: 09.05.2007
(73) Proprietor: MA.RI.NA Systems S.r.l., 24034 Cisano Bergamasco (IT)
(72) Inventor: Rivolta, Pierluigi c/o MA.RI.NA. Systems S.r.l., IT-24034 Cisano Bergamasco (IT)
(74) Representative: Riccardi, Sergio

(56) References cited:
- EP-A- 0 245 824
- EP-A2- 0 807 375
- AU-B2- 655 191
- US-A- 4 835 952
- US-B1- 6 729 116

## Description

The present invention relates to a cutting height adjusting system for a lawnmower, in particular for those lawnmowers provided with so called "casters", which has much useful features and ease during use (see e.g. US-A-6 729 116).

Most of lawnmowers available on the market, even those cheaper, are provided with height adjusting system for cutting blades, because the demand from customers is about capability in achieving a desired height of their lawn/garden grass at choice or based on seasons during cutting operations.

Presently there are two main systems for adjusting height of cutting blades. The first one is a cheaper machine-bound system consists of setting singularly, relative to each lawnmower wheel, frame height, and consequently cutting blade height from the ground, by an adapted lever pivoted on each wheel and operating the same wheel. Therefore it is a system which needs several operations to be performed in order to obtain desired height from the ground, operations which further, for safety reasons, it is preferable to be executed on still rather than moving machine.

The second system, usually used for more expensive and complex machines, consists of providing only one command lever which, by moving some proper linkages, lifts up or lowers main body of the lawnmower, and consequently the cutting blades, both with respect to the wheels and the ground. Such systems, disclosed for example in US Patent No. 4,835,952 and in Australian Patent No. 655.191, allow adjustment of the lawnmower height relative to the ground more simply and directly, even though the machine is moving, but they are rather complicated and expensive to be manufactured.

Therefore an object of the present invention is to overcome the difficulties of the prior art systems for adjusting cutting height of lawnmowers, providing a simple and cheap system to be applied preferably on, but not limiting to, lawnmowers with so called "pivoting" front wheels, namely casters rotating about a vertical axis for 360°.

Main features of the adjusting system of cutting height for lawnmowers according to the present invention are recited in main claim 1. Further advantageous features will be apparent from dependant claims.

Features and advantages of the invention also will be disclosed in greater detail with reference to the appended figures of illustrative drawings showing an explanatory embodiment provided for exemplifying but not limiting purposes. Of course, like reference numerals trough various figures identify the same or similar elements.
Figure 1 is a perspective view of a generic front steering wheels lawnmower provided with height adjusting system according to the invention.
Figure 2 is command lever view, in detail, of height adjusting system shown in Figure 1.
Figure 3 is another detailed view of the specific height adjusting system shown in Figure 1.
Figure is a top view of a generic lawnmower illustrated in Figure 1.

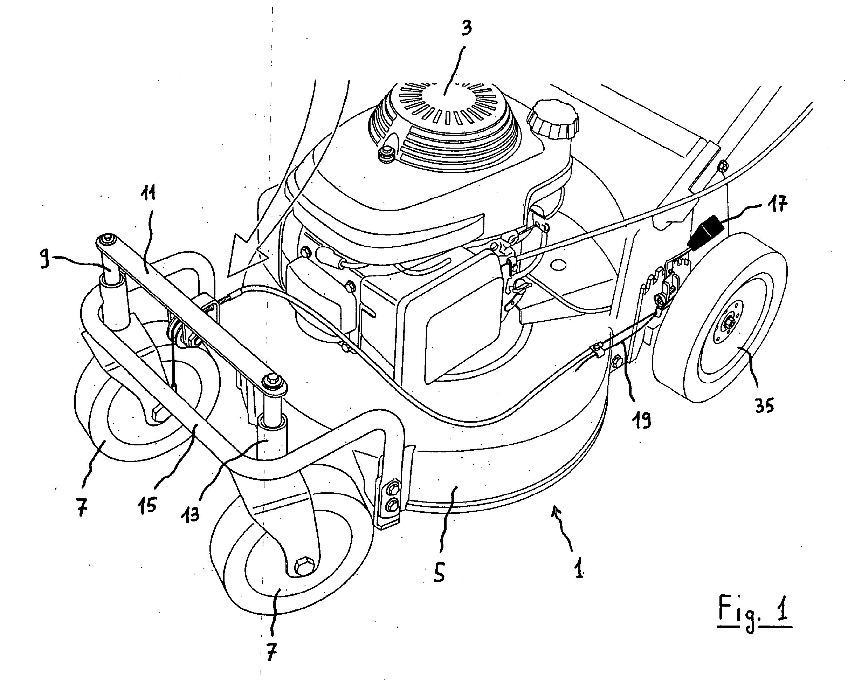

Referring now particularly to Figure 1 of the attached drawings, a generic hand lawnmower 1 is shown provided with combustion engine 3 and main body or frame 5 in which cutting blades (not shown) are housed. Lawnmower 1 is provided with a handlebar 33, rear wheels 35 and, in the illustrated exemplificative embodiment, so-called "pivoting" front wheels 7, that is casters able to rotate around axis of its vertical pivot 9 for 360° in order cause the lawnmower 1 to be driven from user as comfortably as possible even in a limited space.

Advantageously, the pivots 9 of each front wheel 7 are affixed, by known fastening means or by welding, and a substantially horizontal bar 11, preferably made of metal, able to move independently relative to frame 5 of lawnmower 1. Pivots 9 slide, indeed, into suitable sleeves 13 formed integral with a supporting member 15 fixed to the frame 5. Relative movement, described below, between the supporting member 15 and, then, of the frame 5 and both the bar 11 and the wheels 7 leant on the ground determines change in cutting blades height of the lawnmower 1 with respect to the ground.

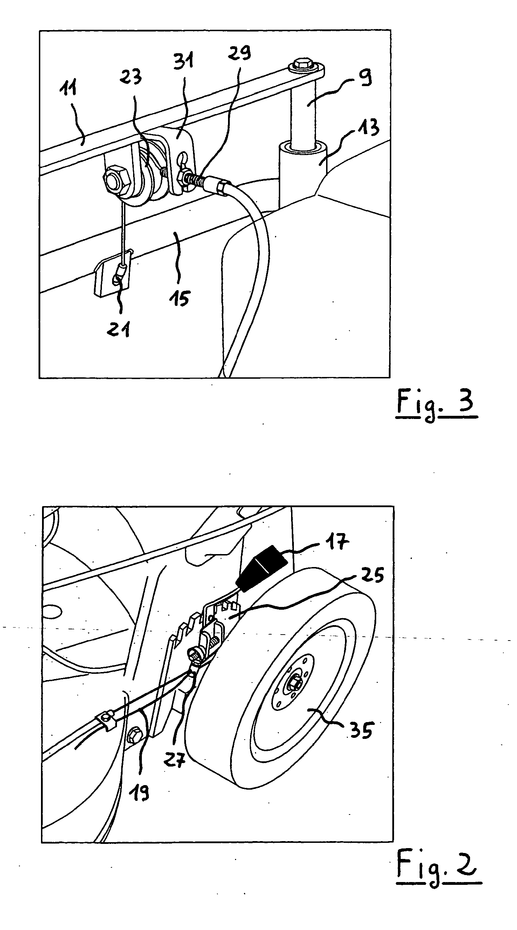

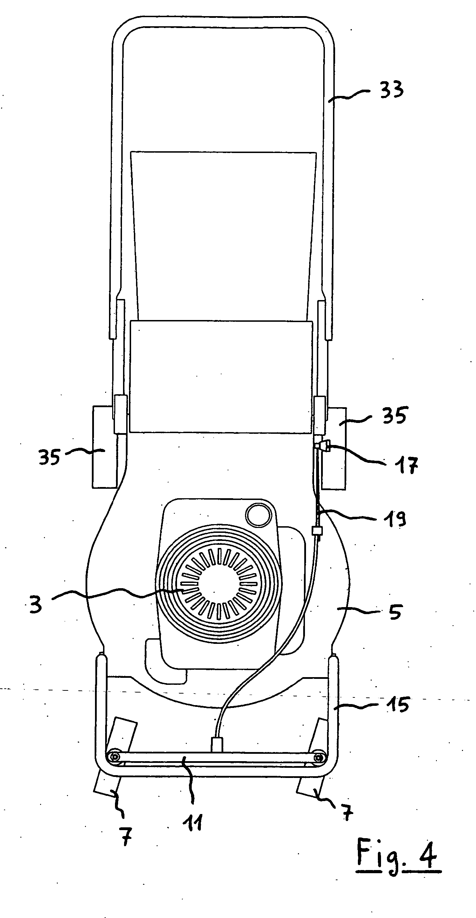

Movement of the supporting member 15 in respect of the bar 11 can be controlled by user from a command lever 17, placed on main body 5 of the lawnmower 1 in this specific example of embodiment but it can even be arranged differently, for example, on the handlebar 33 of the lawnmower 1 for a more comfortable drive. Command lever 17, controlling in an even known way lifting of the frame 5 relative to rear wheels 35, for example by a cam, acts on a flexible cable 19, preferably made of metal, the proximal end of which is affixed on the command lever 17 whilst its distal end 21 is affixed suitably on the supporting member 15 (figure 3). Flexible cable 19 slides on an idle sheave 23 fixed to the bar 11, therefore, by moving the command lever 17 to the desired position, lifting or lowering of the supporting member 15 is achieved and, consequently, of the overall main body 5 provided with the cutting blades relative to the bar 11, which keeps the same height from the ground being linked in a fixed manner to the rotating wheels 7. However, free movement of 360° of the wheels 7 is assured by axial and longitudinal ball bearings placed at the sleeves 13, further facilitating relative movement between supporting member 15 and bar 11.

Cutting blade height of the lawnmower 1 from the ground can be adjusted for a given discrete number of positions by a rack member 25 (figure 2) in which the command lever 17 is engaged and blocked when the desired height form the ground is achieved. In the illustrated example of embodiment, there are five different possible positions of the command lever 17 which allow corresponding heights from the ground for the cutting blades of the lawnmower 1 in a range from about 30 mm to about 80 mm. Further, the flexible cable 19 can be provided one or more micrometric adjusting means of its length in order to allow for heights in respect of the ground different from the initial settings or for maintenance needs. The first of these adjusting means 27, obtained for example by a spring member, can be provided at the proximal end of the flexible cable 19, next to command lever 17, whilst second adjusting means, obtained for example by a threaded member, can act on a hooking member 31 integral with bar 11.

Therefore it is understood that the adjusting system for the cutting height for lawnmower according to the present invention fully achieves intended purposes, allowing for lifting and lowering correctly and in controllable manner the blades of the machine, preferably provided with casters, with a single and handy operation, thus being simpler and cheaper than the prior art systems. Even the reduced number of the elements necessary for its embodiment and its functioning and the possibility of operation in every functioning condition of the lawnmower make it a system being handy and applicable to a wide range of garden lawnmowers.

It is clear that various modifications, adaptations, supplements, variations and/or substitutions of elements could be resorted to the particular example of embodiment, previously described for illustrative but not limiting purpose, especially relative to their arrangements and materials which they are made of, without, however, falling outside the scope of the invention, as defined by the following attached claims.

## Claims

1. An adjusting system of cutting height for lawnmowers (1), comprising a main body or frame (5), in which the cutting blades are housed, a handlebar (33), one or more rear wheels (35), and one or more front wheels (7) able to free rotate about axis of their vertical pivots (9), **characterized in that** the vertical pivots (9) of each front wheel (7) are affixed to a substantially horizontal bar (11) and able to move independent relative to the frame (5) of the lawnmower (1), said vertical pivots (9) sliding into suitable sleeves (13) integral with a supporting member (15) fixed to frame (5), relative movement of supporting member (15) in respect of the bar (11) and the wheels (7) resting on the ground determining change in cutting blade height of the lawnmower (1) from the ground.

2. The system in accordance with claim 1, **characterized in that** movement of the supporting member (15) relative to the bar (11) is controlled by user from a command lever (17) acting on a flexible cable (19), the proximal end said cable affixed on said command lever (17) whilst its distal end (21) is suitably affixed on the supporting member (15).

3. The system in accordance with claim 1, **characterized in that** movement of the supporting member (15) relative to the bar (11) is faciliteded by axial and longitudinal ball bearings placed at the sleeves (13).

4. The system in accordance with claim 2, **characterized in that** the flexible cable (19) slides on at least one idle sheave (23) fixed to the bar (11).

5. The system in accordance with claim 2, **characterized in that** cutting blades height of the lawnmower (1) from the ground can be adjusted to a certain number of discrete positions by means of a rack element (25) in which command lever (17) is engaged and blocked when the desired height form the ground is achieved.

6. The system in accordance with claims 2 or 5, **characterized in that** the flexible cable (19) can be provided with one or more micrometric adjusting means (27, 29) of its length in order to allow for heights in respect of the ground different from the initial settings.

7. The system in accordance with claim 6, **characterized in that** the micrometric adjusting means (27) is obtained by a spring member and it is provided at the proximal end of the flexible cable (19), next to the command lever (17).

8. The system in accordance with claim 6, **characterized in that** the micrometric adjusting means (29) is obtained by threaded member and can act on a hooking member (31) integral with bar (11).

9. The system in accordance with any of the preceding claims, **characterized in that** the command lever (17) can be placed either on main body (5) of the lawnmower (1) or on the handlebar (33) of said lawnmower (1).

## Patentansprüche

1. Schnitthöheneinstellsystem für Rasenmäher (1) bestehend aus einem Hauptkörper bzw. Rahmen (5), in dem die Schnittklingen angeordnet sind, einer Lenkstange (33), einem bzw. mehreren Hintenrädern (35) und einem bzw. mehreren Vorderrädern (7), die um die Achse seines senkrechten Zapfens (9) frei umdrehen können, **dadurch gekennzeichnet, dass** je die senkrechten Zapfen (9) jedes Vorderrads (7) an eine wesentlich waagerechte Stange (11) fixiert sind, die sich unabhängig vom Rahmen (5) des Rasenmähers (1) bewegen kann, die besagten senkrechten Zapfen (9) innerhalb geeigneter Muffen (13) gleiten, die mit einem am Rahmen (5) festen Halteglied (15) einteilig sind, und die Bewegung des Halteglieds (15) bezüglich der Stange (11) und der auf dem Boden liegenden Vorderräder (7) bestimmt die Änderung der Bodenfreiheit der Schnittklingen des Rasenmähers (1).

2. System nach Anspruch 1, **dadurch gekennzeichnet, dass** die Bewegung des Halteglieds (15) bezüglich der Stange (11) vom Benutzer mittels eines Steuerhebels (17) steuerbar ist, indem der Steuerhebel (17) auf ein Bowdenkabel (19) einwirkt, dessen näheres Ende an den Steuerhebel (17) fixiert ist, während sein fernes Ende (21) auf das Halteglied (15) zweckmässig befestigt ist.

3. System nach Anspruch 1, **dadurch gekennzeichnet, dass** die Bewegung des Halteglieds (15) bezüglich der Stange durch axial-und längsgleitende Kugellager erleichtert wird, die an den Muffen (13) angeordnet sind.

4. System nach Anspruch 2, **dadurch gekennzeichnet, dass** das Bowdenkabel (19) auf eine mit der Stange (11) feste Scheibe (23) gleitet.

5. System nach Anspruch 2, **dadurch gekennzeichnet, dass** die Bodenfreiheit der Schnittklingen des Rasenmähers (1) nach einer Anzahl von diskreten Stellungen durch eine Zahnstange (25) eingestellt werden kann, auf die sich der Steuerhebel (17) nach Erreichung einer gewünschten Bodenfreiheit einrastet und festsitzt.

6. System nach Anspruch 2 bzw. 5, **dadurch gekennzeichnet, dass** das Bowdenkabel (19) mit einem bzw. mehreren Feineinstellungsmitteln (27, 29) seiner Länge versehen werden kann, um Bodenfreiheiten des Rasenmähers (1) zu ermöglichen, die sich von den vorbestimmten Grössen unterscheiden.

7. System nach Anspruch 6, **dadurch gekennzeichnet, dass** das Feineinstellungsmittel (27) aus einen Federglied besteht, das am näheren Ende des Bowdenkabels (19) neben dem Steuerhebel (17) angeordnet ist.

8. System nach Anspruch 6, **dadurch gekennzeichnet, dass** das Feineinstellungsmittel (29) aus einem Gewindeglied besteht, das auf ein mit der Stange (11) festes Kupplungsglied (31) einwirkt.

9. System nach den vorigen Ansprüchen, **dadurch gekennzeichnet, dass** der Steuerhebel (17) entweder auf dem Hauptkörper (5) oder auf der Lenkstange (33) des Rasenmähers (1) angeordnet werden kann.

## Revendications

1. Système de réglage de la hauteur de coupe pour tondeuses à gazon (1) comprenant un corps principal ou châssis (5), dans lequel il y a les lames de coupe, un guidon (33), une ou plusieurs roues arrière (35) et une ou plusieurs roues avant (7), qui peuvent tourner librement autour de l'axe de leur pivot vertical (9), **caractérisé en ce que** les pivots verticaux (9) sont fixés à une barre (11) essentiellement horizontale en mesure de se déplacer en manière indépendante du châssis (5) de la tondeuse à gazon (1), les dits pivots verticaux (9) coulissant à l'intérieur de manchons (13) fabriqués en pièce unique avec un élément de support (15) solidaire avec le châssis (5), le mouvement rélatif de l'élément de support (15) par rapport à la barre (11) et les roues appuyant sur le sol, provoquant la variation de la hauteur du sol des lames de coupe de la tondeuse à gazon(1).

2. Système selon la revendication 1, **caractérisé en ce que** le mouvement de l'élément de support (15) par rapport à la barre (11) peut être contrôlé par l'usager moyennant un levier de commande (17) agissant sur un câble souple (19), dont l'extrémité proximale est fixée au dit levier de commande (17) tandis que son extrémité distale (21) est fixée opportunément à l'élément de support (15).

3. Système selon la revendication 1, **caractérisé en ce que** le mouvement de l'élément de support (15) par rapport à la barre (11) est facilité par paliers à billes de glissement axial et longitudinal placés en correspondance des manchons (13).

4. Système selon la revendication 2, **caractérisé en ce que** le câble souple (19) glisse sur au moins une poulie de glissement (23) solidaire avec la barre (11).

5. Système selon la revendication 2, **caractérisé en ce que** la hauteur du sol des lames de coupe da la tondeuse à gazon(1) peut être réglée selon un nombre donné des positions déterminées par un élément à crémaillère (25) sur lequel le levier de commande (17) est embrayé et bloqué lorsque la hauteur voulue du sol est atteinte.

6. Système selon les revendications 2 ou 5, **caractérisé en ce que** le câble souple (19) peut être muni d'un ou plusieurs moyens de réglage micrométrique (27,29) de sa longueur pour permettre des hauteurs du sol de la tondeuse à gazon différentes de celles qui ont été prédéterminées.

7. Système selon la revendication 6, **caractérisé en ce que** le moyen de réglage micrométrique (27) est réalisé par un élément à ressort prévu en correspondance de l'extrémité proximale du câble souple (19) près du levier de commande (17).

8. Système selon la revendication 6, **caractérisé en ce que** le moyen de réglage micrométrique(29) est réalisé par un élément taraudé agissant sur un élément d'accrochage (31) solidaire avec la barre (11).

9. Système selon les revendications précédentes, **caractérisé en ce que** le levier de commande (17) peut être placé soit sur le corps principal (5) de la tondeuse à gazon (1) soit sur le guidon (33) de la dite tondeuse à gazon(1).
